# EUROPEAN PATENT APPLICATION

(11) **EP 3 322 025 A1**
(43) Date of publication of application: **16.05.2018**
(21) Application number: 17196339.0
(22) Date of filing: 13.10.2017
(51) Int. Cl.: H01M 10/6563, H01M 10/613

(54) **BATTERY COOLING APPARATUS**

(30) Priority: 09.11.2016 JP 2016218664
(71) Applicant: Shinano Kenshi Kabushiki Kaisha, Nagano 386-0498 (JP)
(72) Inventor: TAKEUCHI, Masayoshi, Ueda-shi, Nagano 386-0498 (JP); HIRACHI, Eiji, Ueda-shi, Nagano 386-0498 (JP); OKUNO, Yuta, Ueda-shi, Nagano 386-0498 (JP)
(74) Representative: Addiss, John William

(57) **Abstract**

To provide a battery cooling apparatus capable of obtaining a sufficient amount of blown air even when a cooling fan has a predetermined size and achieving cost reduction and size and weight reduction. A rotor shaft (7a) of a motor (7) extends in the shaft direction to the outside of a motor case (8), a plurality of impellers is assembled to the rotor shaft (7a), as many cooling blowers (9A) and (9B) as a plurality of vehicle battery units (1) and (2) are assembled integrally to the motor (7), and discharge ports (9C) of the cooling blowers are disposed so as to face the openings of housing boxes (3) and (4) housing the vehicle battery units (1) and (2).

## Description

### Technical Field

The present invention relates to a battery cooling apparatus for a plurality of vehicle battery units electrically connected to each other, each of the vehicle battery units being housed in one of partitioned housing boxes.

### Background Art

A hybrid vehicle, electric vehicle, or other vehicle widely used in recent years has a battery unit such as a nickel cadmium battery or a lithium ion battery in addition to a lead storage battery for ignition of a gasoline engine. The battery unit is often disposed at the rear of the back seat of the vehicle or at the bottom of the vehicle.

Since a vehicle includes in-vehicle motors in addition to a plurality of electric units (such as a power steering, an anti-lock brake system, an electric wiper, and an electric mirror) controlled by an ECU and electric components of an audio unit and the like, the capacity of the power supply is becoming larger and the battery unit has a plurality of batteries connected in series. Since a single battery unit is insufficient when the capacity of the power supply is becoming larger, a plurality of battery units connected in parallel is arranged in the front-rear direction to obtain a sufficient battery capacity.

When a plurality of battery units is provided in a vehicle, if the temperature of each of the battery units differs due to heat generation, the battery units cannot be charged sufficiently because they have different charge voltages and sufficient power may not be obtained from the batteries. Accordingly, by detecting the temperatures and providing a cooling fan having a driving source in each of the battery units to cool battery units heated to high temperatures or increase the amount of blown air for all battery units for cooling, thereby preventing temperature differences from occurring between the battery units (see PTL 1: JP-A-2008-260458).

### Summary of Invention

### Technical Problem

When a cooling fan is provided for each of the above battery units for cooling, since each cooling fan has a motor as a driving source, the unit size is enlarged, the weight is increased, and the production cost is increased. Since an in-vehicle battery unit needs to be small-sized, a cooling apparatus also needs to obtain a necessary amount of blown air in a smaller size.

When the installation space for battery units is reduced, it is possible to use a flat type motor in which the diameter of a cooling fan is increased and the height in the shaft direction is reduced or a cylinder type motor in which the diameter of a cooling fan is reduced and the height in the shaft direction is increased.

However, when the requested amount of blown air is met while size and weight reduction is achieved, even if the height in the shaft direction of the cooling fan is increased, the amount of blown air is not increased when the diameter of a fan is determined. Alternatively, when a plurality of battery units is cooled by rotating and driving a cooling fan using one motor and dividing the air blowing path, it is difficult to obtain the amount of blown air necessary for cooling because the amount of blown air is reduced by the air blowing resistance.

### Solution to Problem

The invention aims to address these problems with an aim of providing a battery cooling apparatus capable of obtaining a sufficient amount of blown air even when the cooling fan has a predetermined size and achieving size and weight reduction as well as cost reduction.

The invention has the following structure to achieve the above aim.

There is provided a battery cooling apparatus for a plurality of vehicle battery units electrically connected to each other, each of the vehicle battery units being housed in housing boxes respectively, the battery cooling apparatus including a motor including a stator, a rotor, a rotor shaft, and a motor case, the rotor shaft extending in a shaft direction to an outside of the motor case, a plurality of impellers assembled to the rotor shaft, and as many cooling blowers as the vehicle battery units, the cooling blowers being assembled integrally to the motor and having discharge ports disposed so as to face openings of the housing boxes housing the vehicle battery units.

In the above structure, since a plurality of impellers is assembled to the rotor shaft of one motor, as many cooling blowers as the plurality of vehicle battery units are assembled integrally to the motor, and the discharge ports of the cooling blowers are disposed so as to face the openings of the housing boxes housing the vehicle battery units, air is blown from the plurality of cooling blowers operated by the single motor to as many vehicles batteries as the cooling blowers to cool them.

Accordingly, the amount of blown air can be twice or more even when the cooling fans have a predetermined size and size and weight reduction and cost reduction are achieved because only one motor, which is the driving source, rotates and drives the cooling fans.

Preferably, a first cooling blower and a second cooling blower are assembled integrally to the motor, the cooling blowers including the first cooling blower and the second cooling blower, and the discharge port of the first cooling blower is disposed so as to face the opening of the housing box housing a first vehicle battery unit and the discharge port of the second cooling blower is disposed so as to face the opening of the housing box housing a second vehicle battery unit, the vehicle battery units including the first and second vehicle battery units.

In this case, when the motor is started, the first cooling blower can blow air to the first vehicle battery unit to cool it and the second cooling blower can blow air to the second vehicle battery unit to cool it.

In this case, preferably, a first impeller and a second impeller assembled to the rotor shaft of the motor so as to sandwich the rotor therebetween are disposed so as to have blade shapes oriented oppositely to each other, the impellers including the first impeller and the second impeller.

Accordingly, the first vehicle battery unit and the second vehicle battery unit can be cooled by sucking a fluid from both sides in the shaft direction due to the rotation of the motor and blowing the fluid to the first vehicle battery unit and the second vehicle battery unit.

In addition, since the motor is disposed in the middle of the rotor shaft, vibrations of the cooling apparatus can be reduced and the service life can be prolonged.

Preferably, the battery cooling apparatus further includes a first blower case housing the first impeller and a second blower case housing the second impeller, in which the motor is an inner rotor motor and the first impeller and the second impeller are integrally assembled to both sides in the shaft direction of the motor case.

Accordingly, by reducing the height in the shaft direction of the motor, the impellers with the maximum diameter of the first cooling blower and the second cooling blower assembled to both sides in the shaft direction of the motor case can be disposed by providing a height in the shaft direction. Accordingly, the amount of blown air sufficient for cooling the first vehicle battery unit and the second vehicle battery unit can be supplied.

Preferably, the impellers are sirocco fans and the impellers suck a fluid into the blower cases from the shaft direction due to rotation of the motor and blow the fluid to the vehicle battery units from the discharge ports provided in the circumferential direction of the blower cases. This can provide a cooling apparatus that generates less noise, has a stronger static pressure (suction force), and has better motor efficiency even for a large amount of blown air than propeller fans.

### Advantageous Effects of Invention

In the battery cooling apparatus described above, the amount of blown air can be twice or more by rotating and driving a plurality of cooling blowers using a single driving source even when a cooling fan has a predetermined size and size and weight reduction and cost reduction are achieved because a plurality of cooling blowers is rotated and driven using one motor as the driving source. Brief Description of Drawings
Fig. 1 is a perspective view of a battery cooling apparatus attached to a vehicle battery.
Fig. 2 is a side view of the battery cooling apparatus and a cross sectional view of the battery cooling apparatus taken along line D-D.

### Description of Embodiments

A battery cooling apparatus according to an embodiment of the invention will be described with reference to the attached drawings. It is assumed that the battery cooling apparatus for vehicles is installed in a vehicle such as, for example, a hybrid vehicle, an electric vehicle, or a fuel-cell vehicle, which is operable by a driving force by a motor.

According to the invention, the rotor shaft of the motor extends in the shaft direction to the outside of the motor case, a plurality of impellers is assembled to the rotor shaft, and as many cooling blowers as a plurality of vehicle battery units are assembled integrally to the motor. The following illustrates the structure in which two vehicle battery units and as many cooling blowers as the vehicle battery units are provided. It should be noted that the number of vehicle battery units and cooling blowers may be more than two.

The battery unit is formed by connecting a plurality of modules (unit battery) in series. Since this battery unit includes many modules and requires a large space as a group, the battery unit is divided into, for example, a first vehicle battery unit 1 and a second vehicle battery unit 2 and these two battery units are electrically connected in parallel.

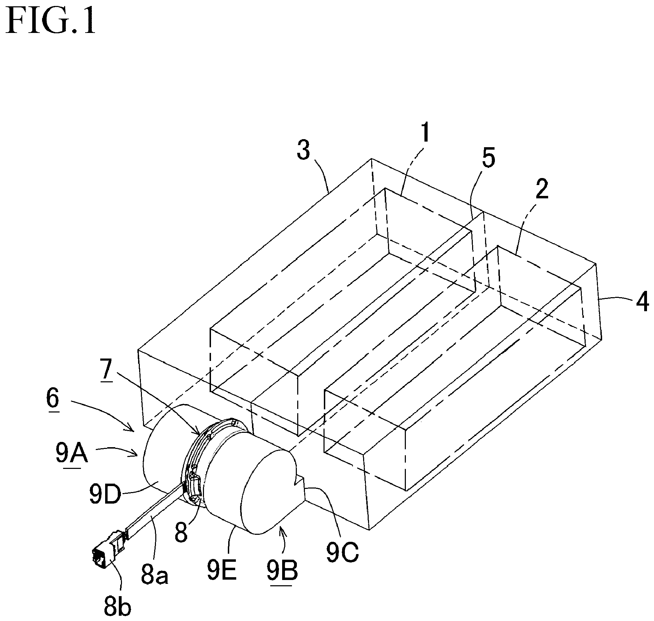

In Fig. 1, the first vehicle battery unit 1 is housed in a first battery housing box 3 formed in a rectangular parallelepiped and the second vehicle battery unit 2 is housed in a second battery housing box 4 formed in a rectangular parallelepiped. These vehicle battery units are disposed at the rear of the back seat of a vehicle or at the bottom of a vehicle so that their longitudinal direction is aligned with the vehicle width direction. The first battery housing box 3 and the second battery housing box 4 are adjacent to each other and partitioned by a partitioning wall 5 so as to become independent cooling channels.

In addition, a battery cooling apparatus 6 is provided on one end side (front side in Fig. 1) in the longitudinal direction of the first battery housing box 3 and the second battery housing box 4.

The battery cooling apparatus 6 integrally includes a motor 7 and first and second cooling blower 9A and 9B in which the impellers are assembled to the both shaft ends of the rotor shaft of the motor 7 penetrating through both sides of a motor case 8.

The first cooling blower 9A provided on one side in the shaft direction of the motor 7 is disposed so that a discharge port 9C faces the opening of the first battery housing box 3 housing the first vehicle battery unit 1. In addition, the second cooling blower 9B provided on the other side in the shaft direction of the motor 7 is disposed so that a discharge port 9C faces the opening of the second battery housing box 4 housing the second vehicle battery unit 2. That is, the discharge ports 9C of the first cooling blower 9A and the second cooling blower 9B are connected to the openings on one end side in the longitudinal direction of the first battery housing box 3 and the second battery housing box 4. Although the discharge ports 9C connected to the openings on one end side in the longitudinal direction of the first battery housing box 3 and the second battery housing box 4 may be disposed so that air is blown to the upper side or the lower side of the battery units, the batteries can be cooled efficiently if air is blown to the lower side.

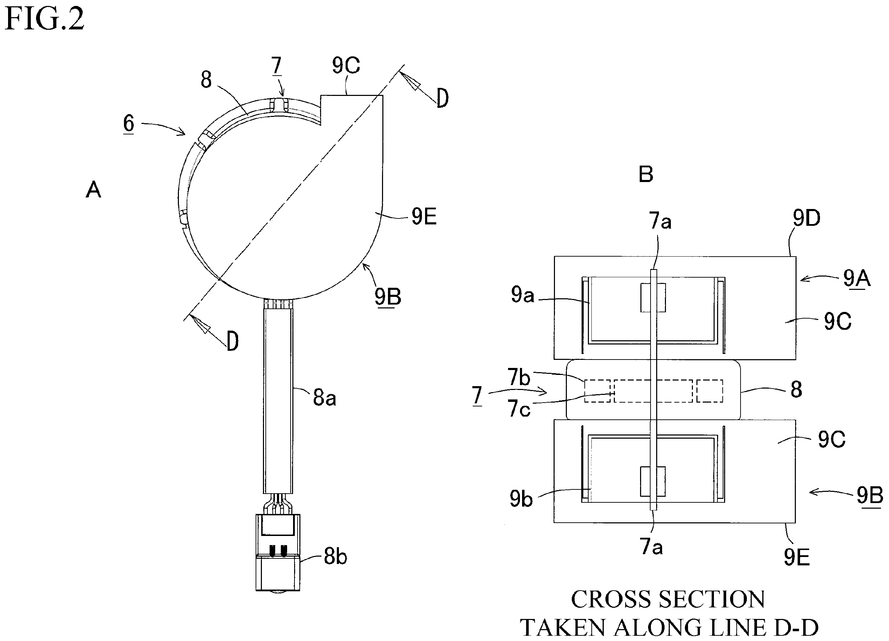

As illustrated in Fig. 2, the motor 7 is an inner rotor motor and a first impeller 9a and a second impeller 9b are assembled integrally to both shaft ends of a rotor shaft 7a penetrating through the motor case 8. The first impeller 9a and the second impeller 9b are disposed so as to have blade shapes oriented oppositely to each other. Accordingly, the first vehicle battery unit 1 and the second vehicle battery unit 2 can be cooled by sucking a fluid from both sides in the shaft direction due to the rotation of the motor 7 and blowing the fluid to the first vehicle battery unit 1 and the second vehicle battery unit 2 from the discharge ports 9C provided in the circumferential direction.

The motor 7 may be a brush motor, a brushless motor, a coreless motor, or another type of motor. Accordingly, by reducing the height in the shaft direction of the motor, the impellers provided in the first cooling blower 9A and the second cooling blower 9B assembled integrally to both sides in the shaft direction of the motor case 8 can be disposed by giving the maximum diameter and providing a height in the shaft direction. Accordingly, the amount of blown air sufficient for cooling the first vehicle battery unit 1 and the second vehicle battery unit 2 can be supplied. In addition, since the motor 7 is disposed in the middle of the rotor shaft 7a, vibrations of the cooling apparatus can be reduced and the service life can be prolonged.

In Fig. 2, a stator 7b and a rotor 7c are housed in the motor case 8. The rotor 7c is assembled concentrically with the rotor shaft 7a. In addition, as illustrated in Fig. 1, a power supplying cable 8a connected to a motor board (not illustrated), which drives and controls the motor, and supplying electric power to the motor 7 is drawn to the outside of the motor case 8 and the end of the cable is provided with a connector 8b to which a terminal is connected. A first blower case 9D housing the first impeller 9a and a second blower case 9E housing the second impeller 9b are assembled integrally to both ends in the shaft direction of the motor case 8.

As illustrated in Fig. 2, sirocco fans are preferably used as the first impeller 9a and the second impeller 9b. This can provide a cooling apparatus that generates smaller noise, has a stronger static pressure (suction force), and has better motor efficiency even for a large amount of blown air than propeller fans.

As illustrated in Fig. 1, the first vehicle battery unit 1 and the second vehicle battery unit 2 are cooled by sucking a fluid from the shaft direction into the blower cases 9D and 9E due to the rotation of the motor 7 and blowing the fluid into the first battery housing box 3 and the second battery housing box 4 via the discharge ports 9C. Temperature sensors (not illustrated) or the like are provided in the first battery box 3 and the second battery box 4 as temperature state detection means and, when the temperature sensors detect heating to a predetermined temperature, a control unit such as an ECU outputs a start instruction to the motor 7 to rotate and drive the first cooling blower 9A and the second cooling blower 9B so as to reduce the temperature to the predetermined temperature or less.

As described above, in the battery cooling apparatus 6, the amount of blown air can be doubled because two fans are provided even when the outer diameter of the cooling fans is determined and size and weight reduction and cost reduction are achieved because two cooling blowers are rotated and driven by one motor as the driving source.

Although the first impeller 9a and the second impeller 9b are provided at the shaft ends of the rotor shaft 7a with the motor 7 sandwiched therebetween, these impellers do not necessarily need to be provided at the shaft ends and may be provided on one side of the rotor shaft 7a of the motor 7. Similarly, although the first cooling blower 9A and the second cooling blower 9B are provided on both sides of the motor 7, these cooling blowers do not need to be disposed symmetrically in the shaft direction with respect to the motor 7 and may be disposed so as to be aligned with the position of the opening of the first battery box 3 or the position of the opening of the second battery box 4.

The motor 7 may be an inner rotor motor or an outer rotor motor, preferably an inner rotor motor.

## Claims

1. A battery cooling apparatus (6) for a plurality of vehicle battery units (1) and (2) electrically connected to each other, the vehicle battery units (1) and (2) being housed in partitioned housing boxes (3) and (4) respectively, the battery cooling apparatus (6) comprising:
a motor (7) including a stator (7b), a rotor (7c), a rotor shaft (7a), and a motor case (8), the rotor shaft (7a) extending in a shaft direction to an outside of the motor case (8);
a plurality of impellers (9a) and (9b) assembled to the rotor shaft (7a); and
as many cooling blowers (9A) and (9B) as the vehicle battery units (1) and (2), the cooling blowers (9A) and (9B) being assembled integrally to the motor (7) and having discharge ports (9C) disposed so as to face openings of the housing boxes (3) and (4) housing the vehicle battery units (1) and (2).

2. The battery cooling apparatus according to claim 1,
wherein a first cooling blower (9A) and a second cooling blower (9B) are assembled integrally to the motor (7), the cooling blowers (9A) and (9B) including the first cooling blower (9A) and the second cooling blower (9B), and
the discharge port (9C) of the first cooling blower (9A) is disposed so as to face the opening of the housing box (3) housing a first vehicle battery unit (1) and the discharge port (9C) of the second cooling blower (9B) is disposed so as to face the opening of the housing box (4) housing a second vehicle battery unit (2), the vehicle battery units (1) and (2) including the first vehicle battery units (1) and the second vehicle battery unit (2).

3. The battery cooling apparatus according to claim 2,
wherein a first impeller (9a) and a second impeller (9b) assembled to the rotor shaft (7a) of the motor (7) so as to sandwich the rotor (7c) therebetween are disposed so as to have blade shapes oriented oppositely to each other, the impellers (9a) and (9b) including the first impeller (9a) and the second impeller (9b).

4. The battery cooling apparatus according to any one of claims 1 to 3, further comprising:
a first blower case (9D) housing the first impeller (9a); and
a second blower case (9E) housing the second impeller (9b),
wherein the motor (7) is an inner rotor motor and
the first blower case (9D) and the second blower case (9E) are assembled integrally to both sides in the shaft direction of the motor case (8).

5. The battery cooling apparatus according to any one of claims 1 to 4,
wherein the impellers (9a) and (9b) are sirocco fans and the impellers (9a) and (9b) suck a fluid from the shaft direction into the blower cases (9D) and (9E) due to rotation of the motor (7) and blow the fluid from discharge ports provided in a circumferential direction of the blower cases (9D) and (9E) to the vehicle battery units (1) and (2).
